Europäisches Patentamt

European Patent Office

Office européen des brevets

(11) Publication number: **0 225 666**
**A1**

## EUROPEAN PATENT APPLICATION

(21) Application number: 86202102.9

(22) Date of filing: 26.11.86

(51) Int. Cl.4: **G01B 7/14** , H01H 13/52 , H01H 13/64

(30) Priority: 06.12.85 NL 8503363

(43) Date of publication of application:
16.06.87 Bulletin 87/25

(84) Designated Contracting States:
DE FR GB NL

(71) Applicant: **Océ-Nederland B.V.**
**St. Urbanusweg 102**
**NL-5914 CC Venlo(NL)**

(72) Inventor: **Limburg, Jilles Martijn**
**Karel 5 Laan 68**
**NL-5915 ZB Venlo(NL)**

(54) **A device for use in adjusting the distance between two parallel surfaces, and a method of adjusting such distance.**

(57) Device for use in adjusting the distance between two parallel surfaces (30, 31) within predetermined limits, as well as a method of adjusting such distance.

The device consists of a resiliently deformable sensor (1) and a signalling circuit (15) in order to detect when upon compression of the sensor (1) the distance between two parallel surfaces (30, 31) is within the tolerance range.

Fig.3

**EP 0 225 666 A1**

## A device for use in adjusting the distance between two parallel surfaces, and a method of adjusting such distance

This invention relates to a device for use in adjusting the distance between two parallel surfaces within predetermined limits. The invention also relates to a method of adjusting such distance.

There are various technical areas in which means are required for reliably adjusting a fairly small distance between two parallel surfaces. One example can be found in US patent 4 168 522, which relates to a copying machine exposure device in which an original is conveyed between two flat glass plates. To avoid imaging errors, the original must be kept flat between the glass plates, and hence with little freedom of movement in the direction perpendicular to the direction of conveyance. This requires accurate adjustment of the small distance between the two glass plates within close tolerances.

The object of the invention is to provide a device of the kind referred to in the preamble, which as a result of compact construction is simple to handle.

According to the invention, this object is attained by a device according to the preamble characterised by
-an electrically insulating flat support provided on both sides with two electrodes which are separated from one another and of which on each side one can be connected to an electrical voltage source,
-two resiliently deformable members having different resilient deformability from one another, said members each being in contact with one side of the flat support in an area not covered by the electrodes and projecting outside the electrodes in a direction perpendicular to the plane of the support,
-two electrically conductive members each carried by one of the said resilient members and extending above the two electrodes so that they each can establish an electrical connection between the two electrodes when the resilient member is deformed by compression, and
-a signalling circuit which signals whether the electrodes are not connected, or are connected on one side or on both sides of the support.

According to the invention, the difference in resilient deformability between the two resilient deformable members can be obtained by different thicknesses of the two members, or by making the two members from materials having different deformability.

The device according to the invention is very suitable for a service engineer to use as an adjustment aid since it enables him easily and reliably to adjust the distance between two surfaces even at places in a machine which are difficult to reach.

The invention will be explained with reference to the accompanying drawings wherein:
Fig. 1 represents the parts forming the device according to the invention,
Fig. 2 is an electrical block circuit of the signalling circuit for the device according to the invention, and
Fig. 3 represents an arrangement to illustrate the adjustment of the distance between two surfaces by means of the device according to the invention.

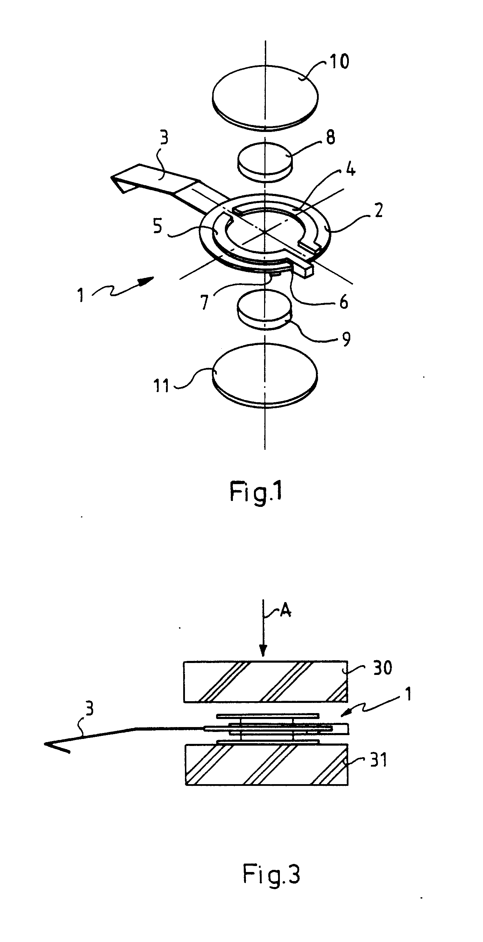

As represented in Fig. 1, the device according to the invention consists of a sensor pack 1 consisting of an electrically insulating baseplate 2 having a handle 3, a number of elements to be described hereinafter being provided on either side of the baseplate 2.

Two electrodes 4, 5 and 6, 7 respectively, which are separated from one another, are provided on each side of the baseplate 2, e.g. in the form of copper tracks. The electrodes 5 and 6 are interconnected and can be connected to an electrical low voltage source (12 V) which is not shown in detail. The other two electrodes 4 and 7 are each connected via a signal line (not shown) to a signalling circuit. A possible embodiment of a signalling circuit of this kind will be discussed hereinafter.

A resiliently deformable member 8, or 9 respectively, is provided between the pair of electrodes 4, 5 or 6, 7 repectively and can be secured to the baseplate 2, for example, by glue. The members 8, 9 may be made of known resiliently deformable materials, e.g. foam rubber. An electrically conductive plate 10, or 11 respectively, is provided on that side of the member 8, or 9 respectively, which is remote from the baseplate 2 and can be secured to the member 8, or 9 respectively, for example by a glued connection. Plate 10 projects beyond the member 8 above the electrodes 4, 5 and plate 11 projects beyond member 9 above electrodes 6, 7. As a result plate 10, or 11 respectively, can establish an electrical connection between electrodes 4 and 5, or 6 and 7 respectively, when the resilient member 8, or 9 respectively, is deformed by compression.

The thickness of the resiliently deformable member 8, or 9 respectively, is such that in the non-compressed state the conductive plate 10, or 11 respectively, is desengaged from the electrodes 4, 5, or 6, 7 respectively.

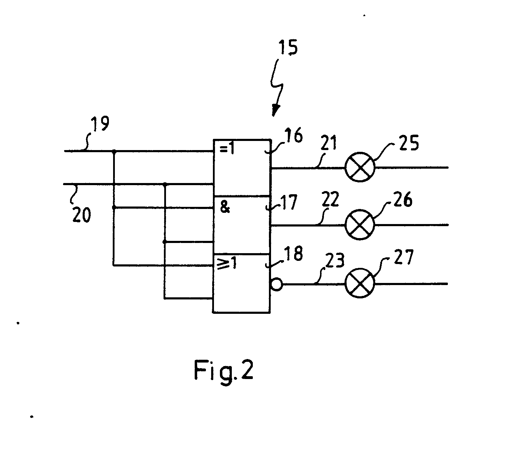

Fig. 2 represents a possible embodiment of the signalling circuit for use in the device according to the invention, in the form of a gate circuit 15. The gate circuit 15 consists of three logic gates each having two inputs, i.e. an exclusive OR gate 16, an AND gate 17 and a NOR gate 18. The two inputs of each gate 16, 17, 18 are connected to the signal lines 19 and 20, which are each connected to one of the electrodes 4 and 7 of the sensor pack 1.

Depending upon the voltage level of the outputs 21, 22, 23 of the gates 16, 17, 18 signalling elements in the form of lamps are or are not actuated. Any elements known from the art can be used as signalling elements, e.g. incandescent lamps, LED's, LCD's or even acoustic signal sources.

In addition to the embodiment of the signalling circuit as described above it is possible of course to use any other suitable embodiment, whether a logic circuit, or a microprocessor provided with a suitable program, in order to translate the output voltages of the electrodes 4, 7 into the required signal.

The above-described sensor pack 1, including the signalling circuit, is intended as an aid in the adjustment of the distance between two parallel surfaces within predetermined limits. This means that not just one specific distance, but any distance between a minimum and a maximum value, must be regarded as a correct distance.

To satisfy this condition, on compression of the sensor pack 1, in the first instance only one pair of electrodes 4, 5 or 6, 7 must be connected via one of the plates 10, 11 while the other pair of electrodes is not connected until further compression of the pack 1.

The dimensions of the various parts of the sensor pack 1 must be so selected that in the situation in which only one pair of electrodes is connected the thickness of the compressed sensor pack 1 corresponds to the maximum value of the required distance between the two surfaces.

As compression of the sensor pack 1 increases, the thickness of the compressed pack at the time when the two pairs of electrodes 4, 5 and 6, 7 are connected by the plate 10 and 11 respectively, must then correspond to the minimum value of the required distance between the two surfaces.

For the method described here, in which the tolerances of a specific distance are signalled, there must be a difference in the deformability of the two resiliently deformable members 8, 9.

The difference in the deformability of the members 8, 9 can be obtained by difference in the thicknesses of the members 8, 9 or by selecting materials for these members which have different deformability characteristics.

The magnitude of the difference in deformability and hence the magnitude of the tolerance range is embodied by a suitable difference in thickness between the members 8, 9 or a suitable selection of material.

Fig. 3 indicates generally how a specific distance between two surfaces 30, 31 can be adjusted by means of the device according to the invention.

The sensor pack 1 is pushed into the space between the two surfaces 30 and 31 by means of the handle 3. By way of example, it will be assumed that surface 31 is fixed and surface 30 is displaceable, by means known in the art, in the direction of arrow A and in the opposite direction.

From the time when surface 30 comes into contact with the sensor pack 1, said pack is increasingly more strongly compressed on further pressure application. The pressure on the sensor pack 1 is initially not yet sufficient for one of the resiliently deformable members 8, 9 to be deformed to such an extent that one of the pair of electrodes 4, 5 and 6, 7 is connected via plate 10, or 11 respectively. Consequently no signal voltage is present at the two inputs 19, 20 of the gate circuit 15, so that a voltage is applied only at output 23 via NOR gate 18 and lamp 27 will light. As long as lamp 27 is illuminated, it means that the distance between the two surfaces 30 and 31 must still be considered excessive.

When the maximum value of the distance between the surface 30, 31 is reached, one of the pairs of electrodes 4, 5 and 6, 7 is connected so that one of the inputs 19, 20 of the gate circuit 15 carries a signal and the other does not. This results in the situation that only the output 21 of the exclusive OR gate 16 of the gate circuit 15 receives voltage so that signal lamp 25 indicates that the distance between the surfaces 30, 31 is within the predetermined tolerances.

This situation for the signalling circuit of Fig. 3 is maintained until the minimum value of the distance of the surface 30, 31 is reached.

Further compression of the sensor pack 1 results in the two pairs of electrodes 4, 5 and 6, 7 being connected so that both signal lines 19, 20 carry voltage. As a result, the voltage level at the output of the exclusive OR gate 16 again becomes zero, while voltage now occurs at the output of the AND gate 17. This results in the indication, via signal lamp 26, that the distance between the surfaces 30 and 31 has become too small.

Finally, when it has been established that the distance between the surfaces is within the tolerance limits, the position of the surfaces 30, 31 with respect to one another can be fixed by means known from the art.

As described above, the device according to the invention provides an excellent aid for adjustment of the distance between two surfaces within predetermined limits. The signalling circuit indicates in any situation whether the distance between the surfaces is excessive, inadequate or correct.

## Claims

1. A device for use in adjusting the distance between two parallel surfaces within predetermined limits, characterised by
-an electrically insulating flat support (2) provided on both sides with two electrodes (4, 5; 6, 7) which are separated from one another and of which on each side one (5, 6) can be connected to an electrical voltage source,
-two resiliently deformable members (8, 9) having different resilient deformability from one another, said members (8, 9) each being in contact with one side of the flat support (2) in an area not covered by the electrodes (4, 5; 6, 7) and projecting outside the electrodes (4, 5; 6, 7) in a direction perpendicular to the plane of the support (2),
-two electrically conductive members (10, 11) each carried by one of the said resilient members (8, 9) and extending above the two electrodes (4, 5; 6, 7) so that they each can establish an electrical connection between the two electrodes (4, 5; 6, 7) when the resilient member (8, 9) is deformed by compression, and
-a. signalling circuit (15, 25 -27) which signals whether the electrodes (4, 5; 6, 7) are not connected, or are connected on one side or on both sides of the support (2).

2. A device according to claim 1, characterised in that the resiliently deformable members (8, 9) are of different thickness.

3. A device according to claim 1, characterised in that the two resiliently deformable members (8, 9) consists of materials which differ from one another in respect of resilient deformability.

4. A method of adjusting the distance between two parallel surfaces within predetermined limits, characterised in that a device according to claim 1, 2 or 3 is placed between the two parallel surfaces - (30, 31), whereafter the two surfaces (30, 31) are moved with respect to one another until the signalling circuit (15, 25 -27) signals that the electrodes - (4, 5; 6, 7) are connected only on one side of the flat support (2).

Fig.1

Fig.3

Fig.2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | FR-A-2 189 848 (N.V. PHILIPS' GLOEILAMPENFABRIEKEN) * Page 1, line 32 - page 4, line 8; figures 1,2,3 * | 1-4 | G 01 B 7/14 H 01 H 13/52 H 01 H 13/64 |
| A | FR-A-2 309 833 (ELECTRICITE DE FRANCE) * Whole document * | 1-4 | |
| A | DE-A-3 300 186 (GFELLER AG) * Figures 1-5; page 5, line 25 - page 9, line 32 * | 1-4 | |
| A | FR-A-2 441 259 (ITT INDUSTRIES) * Figures; page 2, line 18 - page 4, line 35 * | 1-4 | |
| | | | **TECHNICAL FIELDS SEARCHED (Int. Cl.4)** |
| A | WO-A-8 403 172 (GOULD INSTRUMENTS LTD) * Figures 1,2; page 2, line 16 - page 4, line 2; page 4, line 30 - page 5, line 9 * | 1-4 | G 01 B 5/00 G 01 B 7/00 G 01 B 21/00 H 01 H 13/00 G 01 D 5/00 B 21 B 37/00 |
| A | US-A-3 239 938 (DETROIT EDISON CO.) * Whole document * | 1-4 | |
| A | US-A-3 225 294 (R.W. McCLUNG et al.) * Whole document * | 1-4 | |

The present search report has been drawn up for all claims

| Place of search | Date of completion of the search | Examiner |
|---|---|---|
| THE HAGUE | 18-03-1987 | BROCK T.J. |